# EUROPEAN PATENT SPECIFICATION

(11) **EP 1 742 136 B1**
(45) Date of publication and mention of the grant of the patent: **26.11.2008**
(21) Application number: 06076507.0
(22) Date of filing: 18.03.2003
(51) Int. Cl.: G06F 1/00, G06F 21/00

(54) **Method of performing pre-set data processing, corresponding circuit device and DVD-drive comprising the circuit device.**
Verfahren zum Ausführen vorbestimmter Datenverarbeitungsschritte, entsprechendes Bauelement und DVD-Laufwerk beinhaltend besagtes Bauelement.
Méthode de vérification des données, circuit correspondant et lecteur de DVD comprenant le circuit.

(30) Priority: 20.05.2002 JP 2002145264
(43) Date of publication of application: 10.01.2007
(62) Divisional of application: 03251681.7
(73) Proprietor: Sony Corporation, Tokyo 141 (JP)
(72) Inventor: Kitani, Satoshi, c/o IPD Sony Corporation, Tokyo 141 (JP); Moriichi, Munetoshi, c/o IPD Sony Corporation, Tokyo 141 (JP)
(74) Representative: Turner, James Arthur

(56) References cited:
- EP-A- 1 191 421
- US-A- 5 844 986
- US-A- 5 956 408
- US-A1- 2001 042 112
- "WINZIP" ANNOUNCEMENT NICO MAK COMPUTING, 1995, pages 1-106, XP002908148

## Description

This invention relates to program updating for an information processing apparatus. More particularly, it relates to an information processing apparatus, program loading method, a recording medium, a program updating method and a circuit device.

The DVD (Digital Versatile Disc) is an optical disc having a recording capacity capable of recording one-motion-picture-equivalent video and audio data, and is used as a ROM (DVD-ROM; DVD-Read Only Memory).

Since the DVD-ROM records digital data free of deterioration, several protective functions are provided to prevent unauthorized duplication or unauthorized use of digital data recorded thereon.

As typical of the protective functions in reproducing the DVD-ROM is reproduction limitation by RC (regional code). The regional code is a number accorded to each of six global regions. For example, the regional code of US is "1", while that of Japan is "2".

The regional code is accorded to each of the DVD-ROM and to a DVD-ROM drive or a DVD reproducing application, such that a given DVD-ROM cannot be reproduced except in case of coincidence of the respective regional codes. For example, since the regional code "2" is accorded to the DVD-ROM drive manufactured in Japan, such drive is unable to reproduce the DVD-ROM produced in US with the regional code "1". This is a protective function provided for the purpose of protecting a producer of contents, such as motion pictures.

On the other hand, the DVD-ROM has a protective function or system of prohibiting digital duplication. This is termed CSS (content scrambling system) and prohibits digital duplication by arranging so that, while a file itself can be duplicated on e.g., a hard disc, the file represents encrypted data and hence MPEG (Moving Picture Experts Group) data cannot be decrypted.

The DVD-ROM also has a protective function of prohibiting the duplication of output analog data, and a protective function of managing the generation of duplication of digital data among digital equipment by way of imposing limitations on duplication.

This protective function is implemented by a program, termed firmware, written in a preset ROM in the DVD-ROM drive. The firmware is a sort of software, directly controlling the hardware, written in a ROM and built in the hardware.

With the firmware, executing the protective function, written in a preset ROM of the DVD-ROM drive, it becomes possible to eliminate illicitly prepared DVD-Video.

It is in general difficult to rewrite or modify such firmware. However, in a DVD-ROM drive connected to e.g., a PC (Personal Computer) so as to be driven under its control, the necessity for updating the firmware arises as a consequence of the updating of the OS (Operating System) of the PC (Personal Computer). Thus, in such DVD-ROM, the firm ware is configured for being updated.

Moreover, if the PC is not sufficiently compatible in connection performance with the DVD-ROM drive, such connection incompatibility may be improved by updating the firmware of the DVD-ROM drive.

For enabling the updating of the firmware, a so-called flash memory, such as EEPROM (Electrically Erasable Read-Only Memory), which is a programmable ROM which permits of electrical data erasure, is used as a ROM for storing the firmware.

However, when this firmware is to be updated, the firmware can readily be downloaded from a home page provided by a DVD-ROM drive producer, over the Internet, the user is able to obtain the firmware extremely readily.

There is also a problem that the firmware acquired may be tampered by a user and stored in a preset flash memory of the DVD-ROM drive to invalidate the aforementioned protective function of the DVD-ROM drive.

The program tampering is a problem innate to an apparatus in need of program transfer in general inclusive of the firm ware. An apparatus exploiting the tampered program suffers from a problem that it performs an operation different from the expected operation and is apt to fall into disorder in the worst of cases.

A method of verifying encrypted data is disclosed in EP-A-1, 191,421. Also, US-A-2001/004211 describes a prior art device.

Various respective aspects and features of the invention are defined in the appended claims. Features from the dependent claims may be combined with features of the independent claims as appropriate and not merely as explicitly set out in the claims.

In embodiments of the invention, program tampering may be prohibited by preventing program leakage during program updating or loading.

Embodiments of the present invention can provide an information processing apparatus, a program loading method, a recording medium, a program updating method and a circuit device in which tampering of a program that may occur as a result of leakage to outside of program data at the time of program updating or loading to prohibit illicit use of the program data.

In one aspect, the present invention provides a circuit device according to claim 1 appended hereto.

In another aspect, the present invention provides a method according to claim 5 appended hereto.

The invention will now be described by way of example with reference to the accompanying drawings, throughout which like parts are referred to by like references, and in which:
Fig.1 is a block diagram for illustrating the structure of a DVD-ROM device as a first example, not forming part of the invention.
Fig.2 illustrates encoding.
Fig.3 is a flowchart showing the operation in case of updating the firmware in a DVD-ROM drive
Fig.4 is a first flowchart for illustrating the operation in updating the firmware by an update function in the DVD-ROM drive.
Fig.5 is a second flowchart for illustrating the operation in updating the firmware by an update function in the DVD-ROM drive.
Fig.6 is a flowchart for illustrating the operation of confirming whether or not the updating has met with success after the firmware update processing.
Fig.7 is a block diagram for illustrating an alternative configuration of the CPU of the DVD-ROM drive.
Fig.8 is a block diagram for illustrating the structure of a DVD-ROM drive as a second example, not forming part of the invention.
Fig.9 illustrates the structure of a decrypting unit of the DVD-ROM drive.
Fig.10 illustrates the structure of an encryption unit of the DVD-ROM drive.
Fig.11 is a first flowchart for illustrating the firmware update operation by an update function in the DVD-ROM drive.
Fig.12 is a second flowchart for illustrating the firmware update operation by an update function in the DVD-ROM drive.
Fig. 13 is a flowchart for illustrating the operation of confirming whether or not, in the DVD-ROM drive, updating has met with success after the firmware update processing.
Fig.14 is a block diagram for illustrating the structure of a DVD-ROM drive as a first embodiment of the present invention.
Fig.15 illustrates the structure of a decrypting unit for the DVD-ROM drive.
Fig.16 is a flowchart for illustrating the operation in loading a microprogram in the DVD-ROM drive.
Fig.17 is a flowchart for illustrating the operation of generating an encryption program to which has been attached a verification program for prohibiting tampering.
Fig.18 is a flowchart for illustrating the operation of a DVD-ROM drive for executing the encryption program to which has been attached the verification program.
Fig.19 is a flowchart for illustrating the operation of the verification program.
Fig.20 shows a program body to which have been attached the verification program and verification data.
Fig.21 illustrates the hash function.
Fig.22 illustrates the manner of encryption of the program body to which have been attached the verification program and verification data.
Fig.23 illustrates the manner in which check sum data has been attached to the encrypted data.

Referring to the drawings, preferred embodiments of an information processing apparatus, a program loading method, a recording medium, a program updating method and a circuit device according to the present invention will be explained in detail.

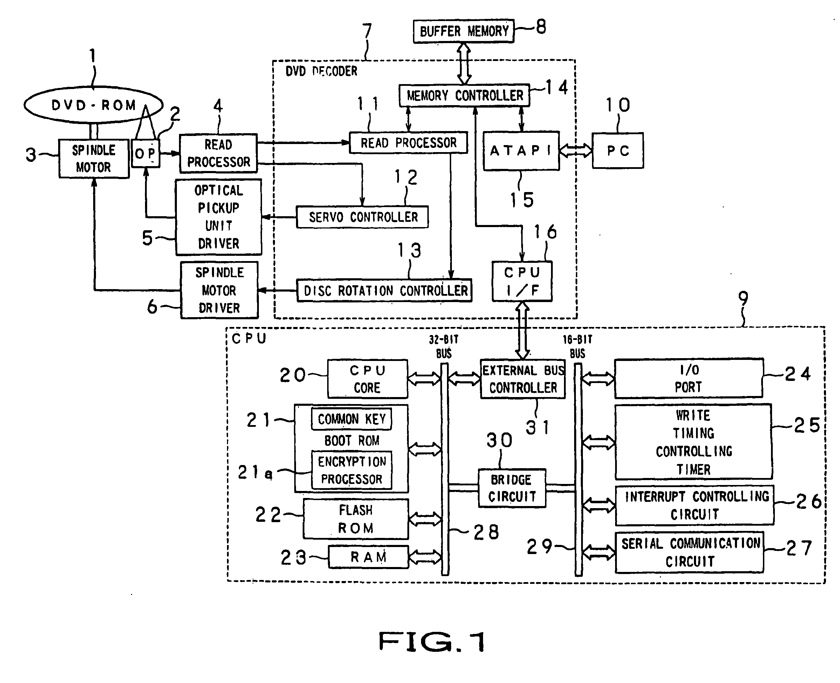

Fig.1 illustrates the structure of a DVD-ROM drive shown as a first example, not forming part of the invention.

The DVD-ROM drive is configured for reproducing a DVD-ROM 1 loaded in position thereon. The DVD-ROM drive is connected to a personal computer (PC) 10, such that the various operations of the DVD-ROM 1 are controlled by the PC 10 connected thereto.

The DVD drive includes an optical pickup unit 2, a spindle motor 3, a read processor 4, an optical pickup unit driver 5, a spindle motor driver 6, a DVD decoder 7, a buffer memory 8 and a CPU 9, although these components are not specifically shown.

The optical pickup unit 2 includes a laser diode for radiating the laser light of a preset wavelength, an objective lens for radiating the laser light of a preset wavelength, radiated from the laser diode, so that the laser light will be condensed on a data recording surface of the DVD-ROM 1, a bi-axial actuator for actuating the objective lens loaded thereon for effecting focussing and tracking adjustments responsive to preset control signals, and a photodetector for receiving the light reflected back from the data recording surface of the DVD-ROM 1 for converting the light into electrical signals to detect the presence or absence of pits on the data recording surface. The electrical signals detected by the photodetector are generally termed RF (radio frequency signals).

The optical pickup unit 2 includes a sled motor for driving the optical pickup unit 2 along the radius of the DVD-ROM 1.

Moreover, if the DVD-ROM drive includes a mechanism for setting the DVD-ROM 1 on a disc tray for loading, not shown, a loading motor for actuating the disc tray may be provided on this optical pickup unit 2.

The spindle motor 3 is a motor for rotationally driving the DVD-ROM 1 loaded in position.

The read processor 4 generates, from the RF signals detected by the photodetector provided on the optical pickup unit 2 EFM+ (eight-to-fourteen bit modulation plus) signals for DVD readout, focussing error (FE) signals for tracking servo, and pull-in signals, to sent the so generated signals to a servo control unit 12.

The optical pickup unit driver 5 is a driver IC (integrated circuit) which is responsive to a preset control signal to actuate a biaxial actuator, sled motor and the loading motor, not shown, of the optical pickup unit 2.

The spindle motor driver 6 is a driver IC responsive to a preset control signal to actuate the aforementioned spindle motor 3.

The DVD decoder 7 includes a DVD signal processor 11, the servo control unit 12, a disc driving unit 13, a memory controller 14, an ATAPI (AT attachment with packet interface) 15 and a CPU I/F 16.

The DVD signal processor 11 includes an RS-PC decoder, an ID processing 8/16 conversion circuit and a wobble detector for giving a decision as to whether or not the medium is recordable.

The servo control unit 12 is responsive to e.g., the FE signals, TE signals or to pull-in signals, transmitted from the read processor 4, to generate control signals for driving-controlling the bi-axial actuator or the sled motor of the optical pickup unit 2 to send the so generated control signals to the optical pickup unit driver 5.

The disc driving unit 13 generates a control signal for controlling the rotation of the spindle motor 3, having loaded the DVD-ROM 1, and sends the generated control signal to the spindle motor driver 6.

The memory controller 14 controls the data write to and data readout from the buffer memory 8.

The ATAPI 15 is an interface for interconnecting and for exchanging data between the PC10 and the DVD-ROM drive.

The interface for connection to the PC10 may also be SCSI (Small Computer) System Interface), USB (Universal Serial Bus) or IEEE (Institute for Electrical and Electronics Engineers) 1394, in place of this ATAPI 15.

The CPU I/F 16 is an interface for interconnecting the DVD decoder 7 and the CPU 9 for controlling the DVD decoder 7 from the CPU 9. The CPU I/F 16 reads out data stored in the buffer memory 8 or writing data therein.

The buffer memory 8 is a random-accessible memory, such as, for example, DRAM (Dynamic Random-Access Memory), and transiently holds the data sent out from the DVD signal processor 11 or from the CPU 9.

The CPU 9 is connected to the DVD decoder 7 over CPU I/F 16 to comprehensively control the functions of the DVD-ROM drive. The structure and the functions of the CPU 9 will be explained in detail subsequently.

The PC 10 is connected to the DVD-ROM drive through e.g., the ATAPI 15 of the DVD decoder 7 to control the operations of the DVD-ROM drive, such as reproduction, stop or data retrieval, by inputting a preset command. The user is able to utilize various data of the DVD-ROM 1 through PC 10.

The structure of the CPU 9 is now explained.

The CPU 9 includes a CPU core 20, a boot ROM 21, a flash ROM 22, a RAM 23, an input/output port 24, a write timing controlling timer 25, an interrupt controlling circuit 26, a serial communication circuit 27, a 32-bit bus 28, a 16-bit bus 29, a bridge circuit 30 and an external bus controller 31.

The CPU core 20 represents a core part of the CPU 9 and includes an arithmetic logic circuit, an adder or a register for executing arithmetic operations or comparative decisions.

The boot ROM 21 is a so-called flash memory, such as EEPROM (Electrically Erasable Programmable Read-Only Memory), which is a programmable ROM capable of electrical data erasure.

The boot ROM 21 has stored therein a boot program that is booted when updating the program stored in the flash ROM 22. In booting this boot program, a preset voltage is applied to a terminal provided for example on the CPU 9. When the preset voltage is applied to the terminal provided on the CPU 9, the boot program is read out beginning from the leading address to execute the boot program.

The boot ROM 21 also includes an encryption processing unit 21a, having stored therein, as a program, a common key used for deciphering the firmware transmitted encrypted, and a deciphering algorithm for decoding the firmware encrypted using this common key.

The flash ROM 22, similarly to the boot ROM 21, is a so-called flash memory, such as EEPROM, which is an electrically erasable programmable ROM.

The flash ROM 22 has stored therein a firmware, that is a firmware, which is a program for imposing reproduction limitations for the DVD-ROM drive. The firmware stored in the flash ROM 22 is a program for executing preset operations of the DVD-ROM drive, for example, the reproduction limitation for DVD-ROM 1 or limitations of digital copying.

An MRAM (Magnetic Random Access Memory), employing a TMR (Tunneling Magneto-Resistive) device, may also be used in place of the flash ROM 22. The MRAM is a memory for magnetically storing data and hence permits data rewriting. Thus, in updating the firmware, the operation of erasing data stored in the MRAM is unnecessary. That is, the pre-update erasure operation for the firmware is unnecessary.

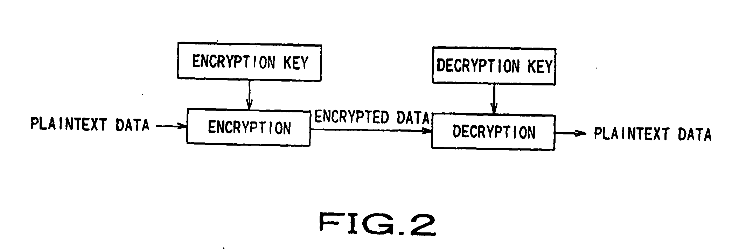

Referring to Fig.2, the common key is explained.

In Fig.2, in encrypting plaintext data, the data is converted to encrypted data, using a preset encryption key. In decrypting the encrypted data, it is converted to plaintext data, using a preset decryption key.

Stated differently, the encryption key is used for encrypting the plaintext data or information, while the decryption key is used for reverting the encrypted data or information to the original plaintext data or information.

The common key means a key used in common as an encryption key for encrypting data as described above and as a decryption key used in decrypting the encrypted data. Since the information of this common key is kept secret, without being opened, the common key is also termed a secret key.

Although the boot ROM 21 and the flash ROM 22 are indicated as being two different flash ROMs, these may be combined into a sole flash ROM, the storage area of which may then be split into a boot area and a program area.

The RAM 23 is e.g., an SRAM (Static Random Access Memory) not in need of refresh operations for maintaining the stored content and which may be accessed speedily. The RAM 23 represents an area in which to unfold data and an updating program when updating the firmware stored in the flash ROM 22.

In general, a flash memory is unable to execute for itself a program for updating the data stored therein. Thus, in updating the firmware, the update function is copied from the boot ROM 21 to the RAM 23, along with the firmware data transmitted from the buffer memory 8.

The input/output port 24 operates as a data input port to and as a data output port from the CPU 9.

The write timing controlling timer 25 controls the write timing when updating the firmware of the flash ROM 22.

The interrupt controlling circuit 26 exercises control to abort the processing currently going on responsive to generation of a preset interrupt to permit execution of the interrupt program.

The serial communication circuit 27 is an interface for transmission/reception of serial data.

The 32-bit bus 28 is a bus capable of transmitting/receiving 32-bit data at a time.

The 16-bit bus 29 is a bus capable of transmitting/receiving 16-bit data at a time.

The bridge circuit 30 interconnects the 32-bit bus 28 and the 16-bit bus 29.

The external bus controller 31 monitors data transmitted between the CPU 9 and the DVD decoder 7 as an external device and controls data input/output with respect to the DVD decoder 7. The external bus controller 31 also has a protecting function such that the RAM 23 and the program stored in the boot ROM 21 and in the flash ROM 22 cannot be referred to on the user level. This allows for imposing limitations on taking out the common key, encryption processing unit 21a and the decrypted firmware from the CPU 9.

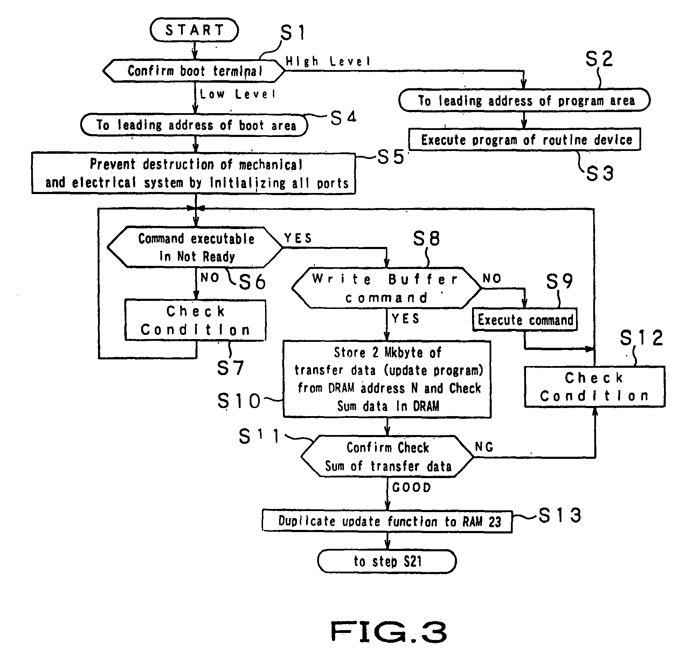

Referring to the flowchart of Fig.3, the operation of updating the firmware stored in the flash ROM 22 is now explained.

First, in a step S1, the CPU core 20 of the CPU 9 proceeds to a step S2 if the voltage applied to a boot terminal is high. If the voltage is low, the CPU core proceeds to a step S4.

The process from step S2 is a process for executing the program stored in the flash ROM 22, while the process from step S4 ff. is a process for booting the boot program stored in the boot ROM 21 to update the firmware.

In the step S2, the CPU core 20 accesses the program of the flash ROM 22, for example, the leading address of the program area in which the firmware is stored.

In a step S3, the CPU core 20 is responsive to the program stored in the program area of the accessed flash ROM 22 to execute the usual processing, such as reproduction or data retrieval, for the DVD-ROM 1.

In a step S4, the leading address of the boot area, in which the boot program of the boot ROM 21 is stored, is read into the CPU core 20, responsive to the low level voltage applied to the boot terminal, to boot the boot program.

In a step S5, the CPU core 20 initializes the totality of ports of the DVD-ROM drive. This prohibits the mechanical and electrical systems of the DVD-ROM drive from being destroyed.

In a step S6, the CPU core 20 verifies whether or not a command that can be executed in a Not Ready state has been input from the PC 10. The Not Ready state herein means a state in which the DVD-ROM 1 is not loaded in position on the DVD-ROM drive or the state in which the DVD-ROM 1 is not recognized by the CPU 9, while the command that can be executed in the Not Ready state means a command that can be executed even if the DVD-ROM 1 has not been recognized. For example, a command to read out preset data from the DVD-ROM 1 is such a command that cannot be executed in the Not Ready state.

If a command that can be executed in the Not Ready state is input, the CPU core proceeds to a step S8. If a command that cannot be executed in the Not Ready state is input, the CPU core proceeds to a step S7.

In the step S7, the CPU core 20 is responsive to the inputting of the command that cannot be executed in the Not Ready state to complete the command in a Check Condition Status to revert to step S6.

In a step S8, the CPU core 20 proceeds to a step S9 if a command different than a write buffer command instructing to update the program of the flash ROM 22 has been sent from the PC 10. If the Write buffer command is transmitted, the CPU core 20 proceeds to a step S10.

In a step S9, the CPU core 20 is responsive to the inputting of the command different than the Write buffer command to execute the input command.

After transmitting the Write buffer command to the DVD-ROM drive, the PC 10 transmits encrypted firmware data, obtained on encrypting, with a common key, the firmware to be updated as a binary file, to the DVD-ROM drive.

In a step S10, the CPU core 20 is responsive to receipt of the Write buffer command to procure an area of 2xM KB of the data storage area of the buffer memory 8, beginning from an address N, where M is a natural number, to cause the binary file transmitted from the PC 10 to be stored in the so procured data storage area.

On receipt of the binary file, the CPU core 20 sums the totality of the binary data to generate Check Sum data which is stored along with the binary file in the buffer memory 8. The Check Sum data, which is data for confirming that the program sent has been received without errors, may be obtained on summing the totality of the data together.

In a step S11, the CPU core 20 verifies the Check Sum data, stored in the step S10 in the buffer memory 8, to check to see if the firmware data transmitted has been correctly received. If the data has been received correctly, the CPU core 20 proceeds to a step S13 and, if otherwise, the CPU core 20 proceeds to a step S12.

In the step S12, the CPU core 20 informs the PC 10 of the fact that the binary data has not been transmitted correctly, as confirmed from the verified results of the Check Sum data of step S11, by completing the command by the Check Condition Status. The CPU core 20 then reverts to step S6.

In a step S13, the CPU core 20 copies the update function, used in updating the firmware to the RAM 23 from the boot ROM 21, in which the update function is presently stored.

The update function is copied to and unfolded in the RAM 23 to operate as an update program for updating the firmware to the flash ROM 22.

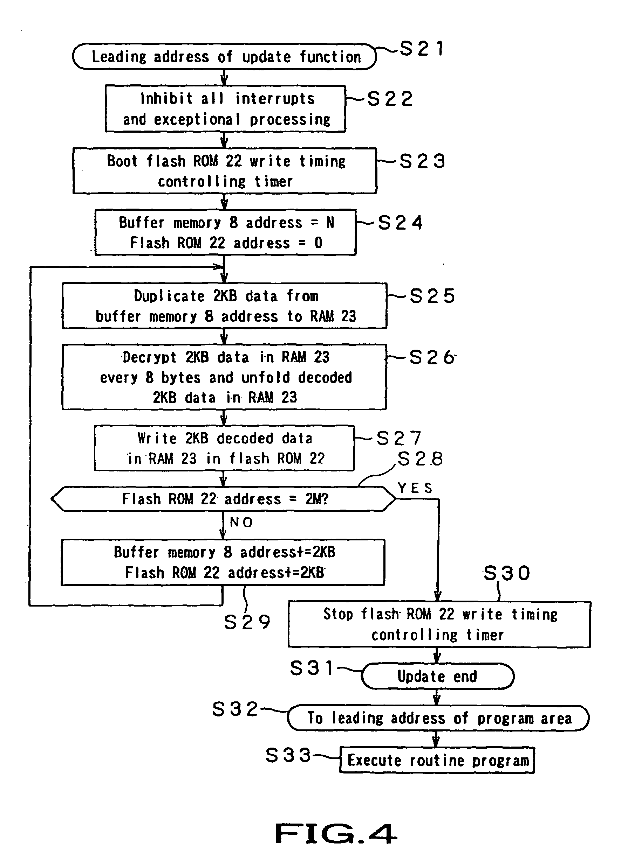

The processing operation by the update function is now explained, using the flowchart shown in Fig.4.

In a step S21, the CPU core 20 accesses the leading address of the update function stored in the RAM 23 to start to update the firmware by the update function to the flash ROM 22.

In a step S22, the CPU core 20 controls the interrupt controlling circuit 26 to inhibit execution of the interrupt program in its entirety as well as to inhibit execution of the exceptional processing.

The CPU core 20 is responsive to the receipt of the Write buffer command, input from the PC 10, to erase data stored in the firmware storage area of the flash ROM 22.

Meanwhile, if the aforementioned MRAM is used in place of the flash ROM 22, it becomes unnecessary to erase the firmware stored, because the MRAM permits data rewriting.

In a step S23, the CPU core 20 boots the write timing controlling timer 25 adapted for controlling the write timing in the flash ROM 22.

The data is subsequently written in the flash ROM 22 based on timing control by the write timing controlling timer 25.

In a step S24, the CPU core 20 accesses the address number N of the buffer memory 8, in which the binary file of the encrypted firmware data is stored, and the address number 0 of the flash ROM 22, in which to store the firmware.

In a step S25, the CPU core 20 reads out the 2 KB data from the address number N of the buffer memory 8 to copy the read-out data in the RAM 23.

In a step S26, the CPU core 20 reads out the 2 KB data, copied to the RAM 23, every 8 bytes, and decrypts the data, using the common key in the boot ROM 21 and the deciphering algorithm stored in the encryption processing unit 21a. The CPU core 20 causes the decrypted 2 KB data, that is deciphered firmware data, to be again stored and unfolded in the RAM 23.

In a step S27, the CPU core 20 causes the 2 KB firmware data, stored in the RAM 23, to be read out from the RAM 23 and written in the flash ROM 22, beginning from the address number 0.

If, in a step S28, the last address number of the firmware data, stored in the flash ROM 22, is 2×M, M being a natural number, the CPU core 20 proceeds to a step S30. If otherwise, the CPU core 20 proceeds to a step S29.

In a step S29, the CPU core 20 accesses an address which is the address number of the buffer memory 8 incremented by 2 KB and an address which is the address number of the flash ROM 22 incremented by 2KB. When ths step is finished, the CPU core reverts to the step S25.

In the step S30, the CPU core 20 stops the write timing controlling timer 25 which controls the write timing to the flash ROM 22.

In a step S31, the updating of the firmware to the flash ROM 22 is finished as a result of the decision in the step S28 that the last address number of the firmware data stored in the flash ROM 22 is 2xM, M being a natural number, and also as a result of the write timing controlling timer 25 being halted in the step S30.

In a step S32, the CPU core 20 is responsive to the updating of the firmware being finished in the step S31 to access the leading address of the program area of the flash ROM 22.

In a step S33, the CPU core 20 is responsive to the program stored in the accessed program area of the flash ROM 22, that is to the as-updated firmware, to execute the usual processing, such as reproduction or data retrieval.

In the DVD-ROM drive, according to the present invention, in updating the firmware stored in the flash ROM 22, the encrypted firmware data, encrypted from the PC 10, is decrypted, using the common key, by the encryption processing unit in the boot ROM 21 in the CPU 9, and is written in the flash ROM 22, thereby preventing firmware data from leaking to outside.

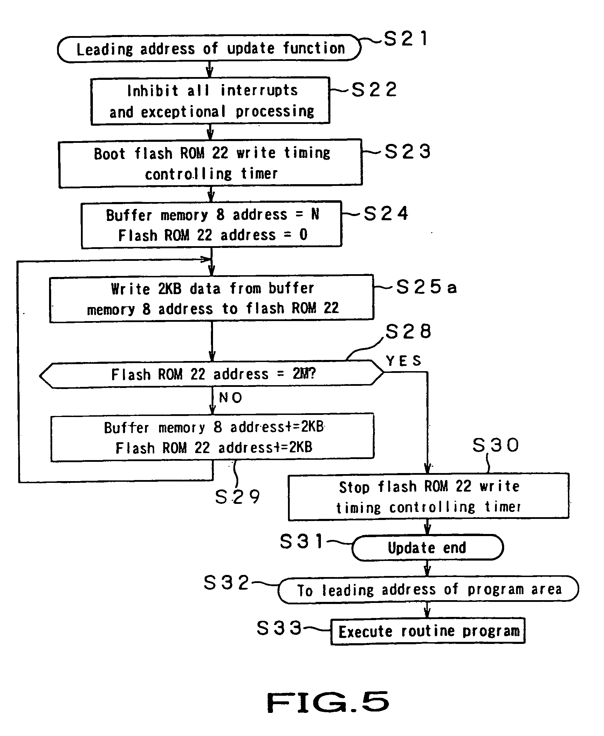

In the flowchart shown in Fig.4, there is stated a technique of receiving the encrypted firmware data from the PC 10 and of decrypting the received encrypted firmware data for writing in the flash ROM 22. If the non-encrypted data are transmitted from the PC 10, the process from the step S25 to the step S27 of Fig.4 may be changed to the process of step S25a of directly writing from the buffer memory 8 to the flash ROM 22, as shown in Fig.5.

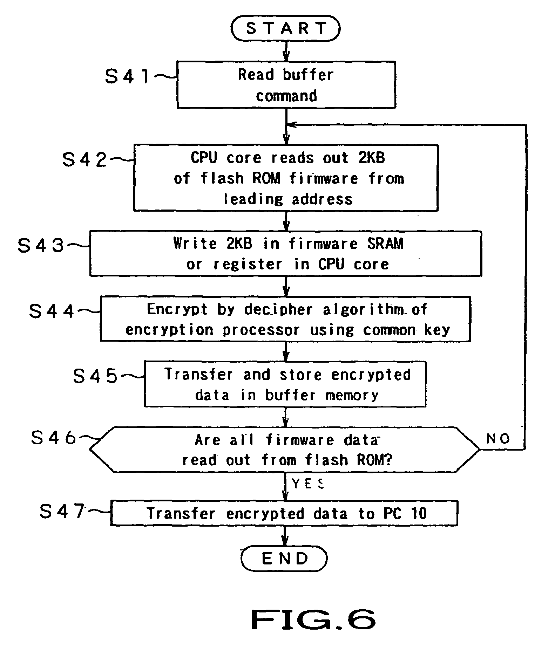

Referring to the flowchart of Fig.6, the processing operation of verifying the result of updating the firmware to the flash ROM 22 by the PC 10 is now explained.

In a step S41, the PC 10 transmits a read buffer command, requesting transfer of the firmware stored in the flash ROM 22, to the DVD-ROM drive.

In a step S42, the CPU core 20 is responsive to receipt of the read buffer command, transmitted from the PC 10, to read out 2KB data of the firmware stored in the flash ROM 22, beginning from the leading address of the flash ROM 22.

In a step S43, the CPU core 20 causes the read-out 2 KB-equivalent data to be recorded and stored in a register of the RAM 23 or in the CPU core 20.

In a step S44, the CPU core 20 controls the encryption processing unit 21a of the boot ROM 21 to read out and encrypt the 2KB equivalent firmware data, stored in the RAM 23 or in the CPU core 20, using the common key, in accordance with the deciphering algorithm stored in the encryption processing unit 21a.

In a step S45, the CPU core 20 transfers the encrypted 2KB equivalent firmware data to the buffer memory 8 for storage therein.

In a step S46, the CPU core 20 detects whether or not the totality of the firmware data stored in the flash ROM 22 has been read out. If the entire firmware data has been read out, the CPU core 20 proceeds to step S47 and, if the entire firmware data has not been read out, the CPU core reverts to the step S42.

In a step S47, if the totality of the firmware data stored in the flash ROM 22 has been read out and stored encrypted in the buffer memory 8, the CPU core 20 transfers the encrypted firmware data, stored in the buffer memory 8, to the PC 10.

The transferred encrypted firmware data is compared, in the encrypted state, in the PC unit, to the original data, to check for coincidence.

In this manner, the PC 10 is able to verify whether or not the firmware has been reliably updated in the flash ROM 22 of the DVD-ROM drive. Since the firmware is encrypted in the CPU 9 and transmitted in this state to the PC 10, and hence the plaintext firmware cannot be acquired partway on the transmission route, it is possible to prevent the firmware from being analyzed or tampered.

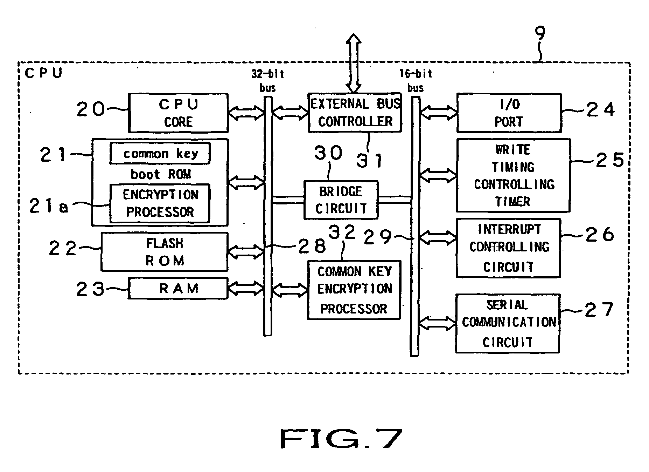

In the CPU 9 of the DVD-ROM drive, configured as shown in Fig.1, the encrypted firmware data is decrypted by a program of the deciphering algorithm, stored in the boot ROM 21. Alternatively, the encryption processing unit, as a program, may be formed into hardware as a common key encryption processing unit 32, by way of re-constructing the CPU 9, as shown in Fig.7.

The CPU 9, having the common key encryption processing unit 32, performs high-speed encryption processing, so that the firmware can be updated more speedily. The update processing is here not explained because it is similar to the operation explained in connection with the flowchart of Figs.3 and 4.

In the above explanation, the encrypted firmware, transmitted from the CPU 10, is deciphered by the CPU 9 itself and uploaded to the flash ROM 22 provided in the CPU 9. This CPU 9 includes the boot ROM 21 as an encryption processing unit for deciphering the encrypted firmware.

In this manner, the encryption processing unit for deciphering the encrypted firmware, such as the boot ROM 21 provided to the CPU 9, may be loaded in the DVD decoder 7 shown in Fig.1. It may be said to be more realistic to customize the DVD decoder 7 such as to load the encryption processing unit thereon.

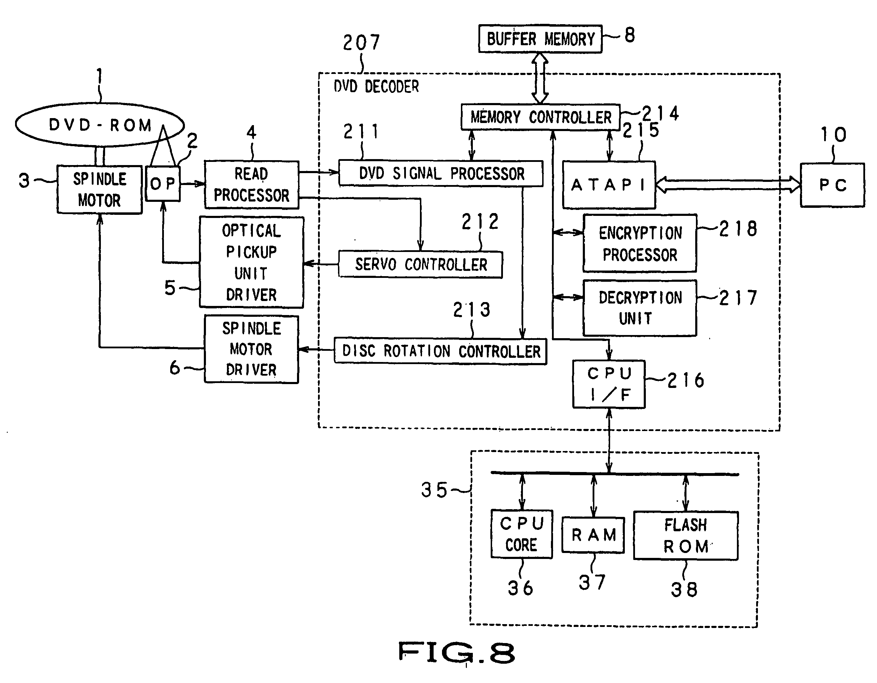

The DVD-ROM drive, comprised of a DVD decoder and a decrypting unit 17 for deciphering the encrypted firmware, shown as a second embodiment in Fig.8, is hereinafter explained.

A DVD decoder 207 in the DVD-ROM drive, shown in Fig.8, is comprised of the DVD decoder 7, shown in Fig.1, to which are annexed a decrypting unit 217 for deciphering the encrypted firmware input from the PC 10, and an encryption unit 218 for encrypting the plaintext firmware stored in a flash ROM 38 in verifying the plaintext firmware by the PC 10. The DVD-ROM drive is otherwise the same as the DVD-ROM drive shown in Fig.1.

The decoder 217 and the encryption unit 218 are able to analyze a stream cipher, as one of the common key cipher techniques, for encrypting the plaintext using, as an encryption key, the random number termed a key stream (pseudo-random number). The encryption and decryption by a stream cipher system is sequentially carried out in terms of a small-data block as a unit, for example, every bit or every several bits, such as every byte.

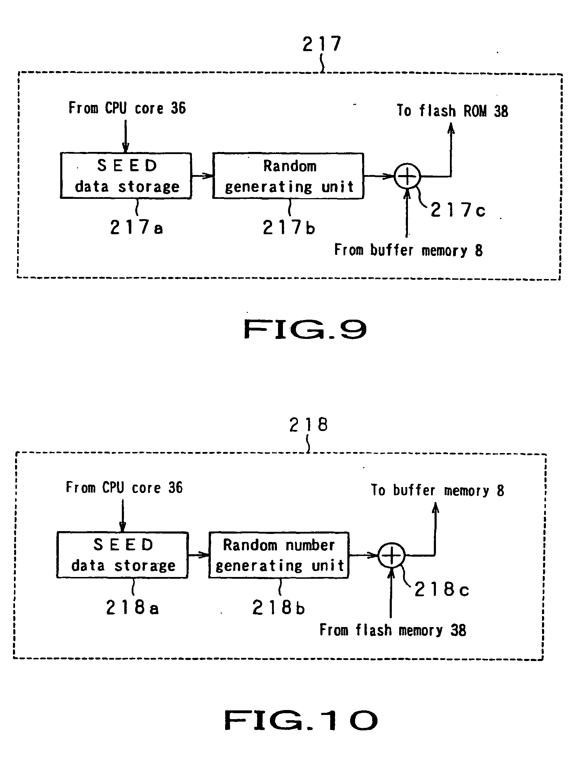

If adapted for coping with the stream cipher, the decoder 217 includes a SEED data storage unit 217a,-a random number generating unit 217b and an exclusive-OR unit 217c, as shown in Fig.9.

The SEED data storage unit 217a has stored therein SEED data, which is an initial input value to the random number generating unit 217b and which corresponds to the common key, and outputs the stored SEED data to the random number generating unit 217b, responsive to a command from a CPU core 36.

The SEED data, stored SEED data storage unit 217a, may be of a pre-stored fixed value, or can be optionally set from the CPU core 36.

The random number generating unit 217b is responsive to the SEED data input from the SEED data storage unit 217a to generate random numbers, in accordance with a preset algorithm, to output the so generated random numbers to the exclusive-OR unit 217c.

The exclusive-OR unit 217c takes an Ex-Or of the encrypted firmware data read out from the buffer memory 8 in terms of a preset data length as a unit, and the random numbers output from the random number generating unit 217b, by way of decrypting the firmware data, and outputs the decrypted plaintext firmware data to the flash ROM 38 in a CPU 35.

If adapted for coping with the stream cipher, the encryption unit 218 includes a SEED data storage unit 218a, a random number generating unit 218b and an exclusive-OR unit 218c, as shown in Fig.10.

The SEED data storage unit 218a has stored therein SEED data, which is an initial input value to the random number generating unit 218b and which corresponds to the common key, and outputs the stored SEED data to the random number generating unit 218b, responsive to a command from the CPU core 36.

The SEED data, stored in the SEED data storage unit 218a, may be of a pre-stored fixed value, or can be optionally set from the CPU core 36.

Meanwhile, the SEED data, input from the SEED data storage unit 218a to the random number generating unit 218b, is the same as the SEED data input to the random number generating unit 217b of the decoder 217 from the SEED data storage unit 217a.

The random number generating unit 218b is responsive to the SEED data input from the SEED data storage unit 218a to generate random numbers, in accordance with a preset algorithm, to output the so generated random numbers to the exclusive-OR unit 218c.

The algorithm used in the random number generating unit 218b is the same as the algorithm used for generating the random numbers in the random number generating unit 217b of the decoder 217.

The exclusive-ORunit 218c takes an Ex-Or of the plaintext firmware data, read out from the flash ROM 38 in terms of a preset data length as a unit, and the random numbers output from the random number generating unit 218b, by way of encrypting the firmware data, and outputs the encrypted plaintext firmware data to the buffer memory 8.

The CPU 35 includes a CPU core 36, a RAM 37 and a flash ROM 38. The CPU 35 is connected through a CPU I/F 216 to the DVD decoder 207.

The CPU core 36, similarly to the CPU core 20, shown in Fig.1, represents a core part of the CPU 35 and includes an arithmetic logic circuit, an adder or a register for executing arithmetic operations or comparative decisions. The RAM 37, similarly to the RAM 23, shown in Fig.1, is e.g., an SRAM (Static Random Access Memory) not in need of refresh operations for maintaining the stored content and which may be accessed speedily. The RAM 37 represents an area in which to unfold data and an updating program when updating the firmware stored in the flash ROM 38.

The flash ROM 38 is a so-called flash memory, such as EEPROM, which is an electrically erasable programmable ROM. The flash ROM 38, similarly to the flash ROM 22 shown in Fig.1, has stored therein a firmware, which is a program for imposing reproduction limitations for the DVD-ROM drive.

The plaintext firmware data, decrypted by the decrypting unit 217 of the DVD decoder 207, is output to the flash ROM 38 in the CPU 35 through a CPU/IF 216.

The flash ROM 38, similarly to the flash ROM 22 provided in the CPU 9 of the DVD-ROM drive shown in Fig.1, may be an MRAM, employing a TMR device.

In the DVD-ROM drive, shown in Fig.8, the plaintext firmware data , decoded by the DVD decoder 207, is transmitted in the plaintext state to the CPU 35. Consequently, the risk is high that, during transfer, the wiring be acted upon to underlook the plaintext firmware data.

Thus, it becomes necessary to provide the wiring between the CPU 35 and the DVD decoder 207, where flows the plaintext firmware data, as an inner layer of a multi-layered substrate, or to design a semiconductor package as a ball grid array with no pin-like projection.

Meanwhile, the functional units different than the CPU 35 and the DVD decoder 207 of the DVD-ROM drive are the same as those provided to the DVD-ROM drive shown in Fig.1 and hence are not explained specifically.

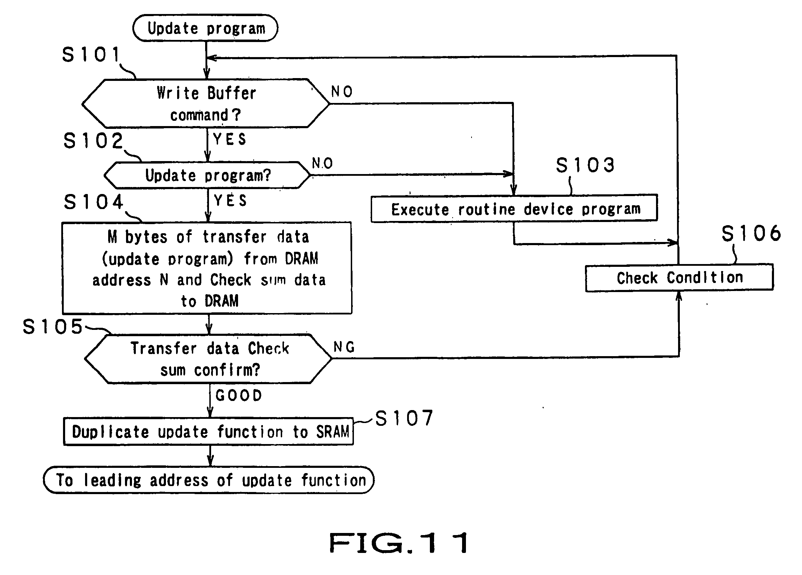

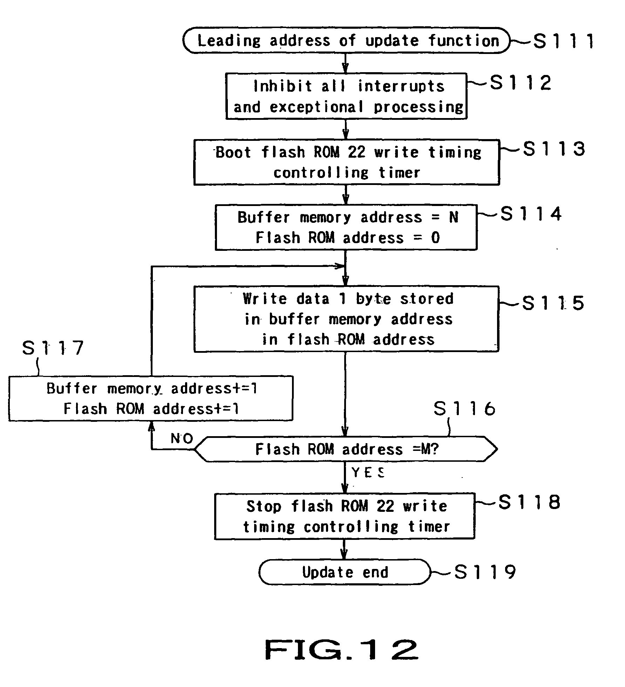

Using the flowcharts of Figs.11 and 12, the operation in updating the firmware stored in the flash ROM 38 is now explained. First, using the flowchart shown in Fig.11, the operation until the update function is read into the RAM 37 is explained.

In a step S101, the CPU core 36 checks to see if a command transmitted from the PC 10 and received is a Write buffer command. If the command is not the Write buffer command, the CPU core proceeds to a step S102 and, if the command is the Write buffer command, the CPU core 36 proceeds to a step S103.

In the step S102, the CPU core 36 checks to see if a parameter commanding the updating of the firmware stored in the flash ROM 38 has been appended to the Write buffer command transmitted from the PC 10. If the parameter is not appended to the command, the CPU core 36 proceeds to the step S103 and, if the parameter is appended to the command, the CPU core 36 proceeds to a step S104.

In the step S103, the CPU core 36 is responsive to the command from the PC10 not being the Write buffer command to execute the transmitted command. The CPU core 36 is also responsive to the command from the PC10 being the Write buffer command but the firmware update instructing parameter not being appended to the command to exercise control to write data other than the firmware transmitted from the PC 10 in the buffer memory 8. When the process of step S103 comes to a close, the CPU core 36 reverts to a step S101.

After transmitting the Write buffer command to the DVD-ROM drive, the PC 10 sends encrypted firmware data for updating, corresponding to the firmware for updating, encrypted in accordance with the stream encryption system, as a binary file to the DVD-ROM drive.

In the step S104, the CPU core 36 is responsive to receipt of the Write buffer command to procure an M-byte equivalent area, beginning from an address N, of a data storage area of the buffer memory 8, M being a natural number, to store the binary file transmitted from the PC 10 in the so procured data storage area.

In a step S105, the CPU core 36 confirms the Check Sum of the transferred binary file. To the transmitted binary file is appended the Check Sum data. The CPU core 36 compares the appended Check Sum data to the sum value of the binary data of the binary file transmitted and, if the two are coincident, it is assumed that the binary file has correctly been transmitted. The CPU core 36 then proceeds to a step S107. If the two are not coincident, it is assumed that the transmission of the binary file has met with failure, and the CPU core 36 proceeds to a step S106.

In the step S106, the CPU core 36 informs the PC 10 of the fact that the binary file has not correctly been transmitted, as may be evidenced from the verified results of the Check Sum data, by terminating the command with the Check Condition Status, to then revert to the step S101.

In the step S107, the CPU core 36 duplicates the update function of updating the firmware of the flash ROM 38 stored in the flash ROM 38 to the RAM 37 to enable the program of the CPU core 36 to be executed on the RAM 37.

The CPU core 36 then erases data stored in the firmware storage area of the flash ROM 38, that is the pre-update firmware. Meanwhile, this erasure operation is omitted if the flash ROM 38 is the rewritable MRAM.

Using the flowchart, shown in Fig.12, the processing operation by the update function is now explained.

In a step S111, the CPU core 36 accesses the leading address of the update function stored in the RAM 37 to start to update the firmware by the update function to the flash ROM 38 of the firmware.

In a step S112, the CPU core 36 controls an interrupt controlling circuit, not shown, to inhibit execution of the interrupt program in its entirety as well as to inhibit execution of the exceptional processing.

In a step S113, the CPU core 36 boots a write timing controlling timer, not shown, which controls the write timing to the flash ROM 38. Subsequently, the writing of data in the flash ROM 38 is carried out under timing control by the write timing controlling timer.

In a step S114, the CPU core 36 accesses the address number N in the buffer memory 8 where the encrypted firmware data is stored and the address number 0 of the flash ROM 38 in which to store the firmware.

In a step S115, the CPU core 36 reads out data in terms of a data volume convenient for decoding as a unit, e.g., every byte, beginning from the address number N of the buffer memory 8, and decrypts the data in the decrypting unit 17 to the plaintext. The CPU core 36 causes the decrypted plaintext firmware data to be stored in the register in the CPU core 36 or in the RAM 37.

The CPU core 36 reads out the firmware data stored in the register in the CPU core 36 or in the RAM 37 to write the read-out data in the flash ROM 38 beginning from the address number 0 of the flash ROM 38.

In a step S116, the CPU core 36 checks to see if the firmware data has been written in its entirety in the flash ROM 38. If he address number is not M, the CPU core 36 proceeds to s step S117 and, when the address number is M, the CPU core 36 proceeds to s step S118.

In the step S117, the CPU core 36 accesses an address which is the address number of the buffer memory 8 incremented by 1 byte and an address which is the address number of the flash ROM 38 incremented by 1 byte. When ths step is finished, the CPU core 20 reverts to the step S115 to read out the encrypted firmware data from the accessed address number of the buffer memory 8 as well as to write the decrypted plaintext firmware data in the accessed address number in the flash ROM 38.

In a step S118, the CPU core 36 stops the write timing controlling timer which controls the write timing to the flash ROM 38.

In a step S119, the updating of the firmware to the flash ROM 38 is finished as a result of the decision in the step S116 that the last address number of the firmware data stored in the flash ROM 38 is M, M being a natural number, and also as a result of the write timing controlling timer 25 being halted in the step S118. This completes the firmware updating to the flash ROM 38.

Thus, in the DVD-ROM drive of the present invention, shown in Fig.8, when updating the firmware stored in the flash ROM 38, the encrypted firmware data, encrypted in accordance with the stream ciphering system in the PC 10, is decrypted in the decoder 217 in the DVD decoder 207 and written in the flash ROM 38 in the CPU 35.

In the data exchange between the DVD decoder 207 and the CPU 35, plaintext firmware data is transmitted. In this case, leakage of the firmware data may be prohibited by using mounting level artifices, such as not allowing the exposure of the semiconductor package terminal portions, or proper wiring.

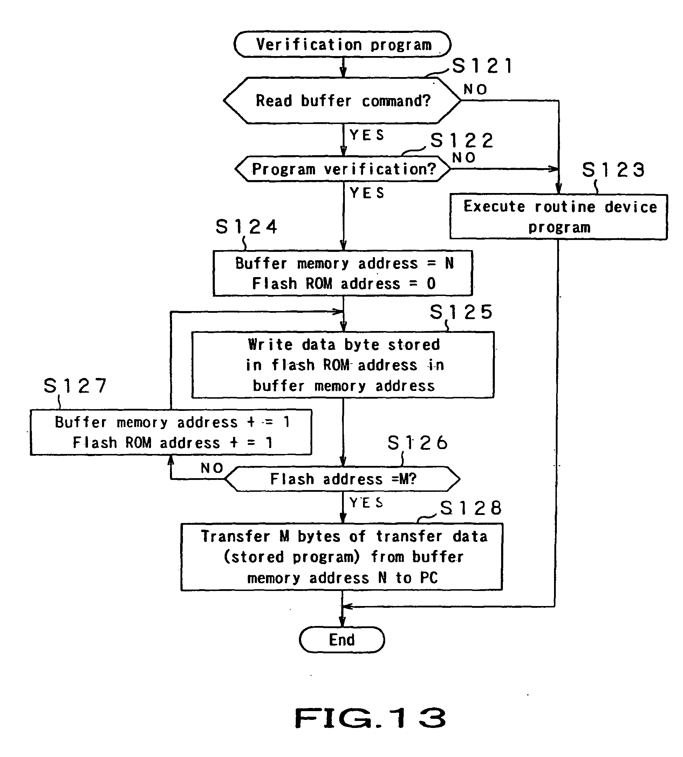

Using the flowchart shown in Fig.13, the processing in verifying the results of updating the firmware to the flash ROM 38 by the PC 10 is now explained.

In a step S121, it is checked whether or not the command transmitted from the PC 10 and received is the Read buffer command. If the command is not the Read buffer command, the CPU core proceeds to a step S123 and, if the command is the Read buffer command, the CPU core 36 proceeds to a step S122.

In the step S122, the CPU core 36 detects whether or not a parameter instructing readout of the firmware stored in the flash ROM 38 is appended to the Read buffer command transmitted from the PC 10. If the parameter is not appended, the CPU core proceeds to a step S123 and, if the parameter is appended, the CPU core 36 proceeds to a step S124.

In the step S123, the CPU core 36 is responsive to the command from the C 10 not being the Read buffer command to execute the transmitted command. The CPU core 36 is also responsive to the transmitted command being the Read buffer command but the firmware update instructing parameter not being appended to the command to exercise control to read out data other than the firmware from the buffer memory 8. When the process of step S123 comes to a close, the processing is completed.

After transmitting the Read buffer command to the DVD-ROM drive, the PC 10 sends encrypted firmware data, which is the firmware data for updating, encrypted in accordance with the stream cipher system, as a binary file to the DVD-ROM drive.

In a step S124, the CPU core 36 accesses the address number N of the buffer memory 8 and the address number 0 of the flash ROM 38 where the firmware is stored.

In a step S125, the CPU core 36 reads out data in terms of a data volume convenient for decoding, as a unit, e.g., every byte, beginning from the address number 0 of the flash ROM 38, for storage in the register in the CPU core 36 or in the RAM 37.

The CPU core 36 reads out plaintext firmware data, stored in the register in the CPU core 36 or in the RAM 37, and encrypts the so read out data in the encryption unit 218 of the DVD decoder 207 to encrypted firmware data. The CPU core 36 writes the encrypted firmware data, in an area beginning from the address number N of the buffer memory 8.

In a step S126, the CPU core 36 verifies whether or not the totality of the firmware data has been read out from the flash ROM 38. If the address number is not M, the CPU core 36 proceeds to a step S127 and, if the address number is M, the CPU core 36 proceeds to a step S128.

In the step S127, the CPU core 36 accesses an address number of the buffer memory 8 incremented by 1 byte and an address number of the flash ROM 38 incremented by 1 byte. When this process comers to a close, the CPU core 36 reverts to the step S125 to read out the firmware data beginning from the accessed address number of the flash ROM 38 to write the encrypted firmware data in the accessed address number of the buffer memory 8.

In the step S128, the CPU core 36 is responsive to the totality of the firmware data being read out from the flash ROM 38 and stored in the buffer memory 8 to transmit the encrypted firmware data stored in the buffer memory 8 to the PC 10.

The encrypted firmware data transmitted is compared in the encrypted state to the original data in the PC 10 to check to see if the two are coincident with each other.

Thus, the PC 10 is able to check whether or not the firmware has been reliably updated in the flash ROM 38 of the DVD-ROM drive.

In the data exchange between the DVD decoder 207 and the CPU 35, plaintext firmware data is transmitted. In this case, leakage of the firmware data may be prohibited by using mounting level artifices, such as not allowing the exposure of the semiconductor package terminal portions, or proper wiring.

It should be noted that, in general, the program executed on e.g., a PC (personal computer) is stored in an auxiliary storage device, such as a hard disc (HD), and is loaded in a main memory device, such as RAM (random access memory) on PC power up. The CPU reads in the program loaded in the main memory device to execute the program.

Thus, when the program executed by the CPU is to be loaded on the main memory device, an IPL (Initial Program Loader), resident in the CPU core or initially read in from the HD, is used.

In the DVD-ROM drive, explained as the first embodiment with reference to Fig.1 and in the DVD-ROM drive, explained as the second embodiment with reference to Fig.8, there are occasions where the CPU be provided on the DVD decoder. In this case, the CPU provided on a DVD decoder operates similarly to the PC described above to read out the program stored in the external storage device to the RAM to execute the program read out to the RAM to carry out preset processing such as DVD decoding.

Thus, the program, stored in the external storage device, is apt to be underlooked when read out to the RAM within the DVD decoder to give rise to such act as program analysis or tampering, and hence the program needs to be stored in the encrypted state.

In the following explanation, the program executed by the CPU provided on the DVD decoder is termed a microprogram, while microprogram data in the encrypted state is termed the encrypted microprogram data.

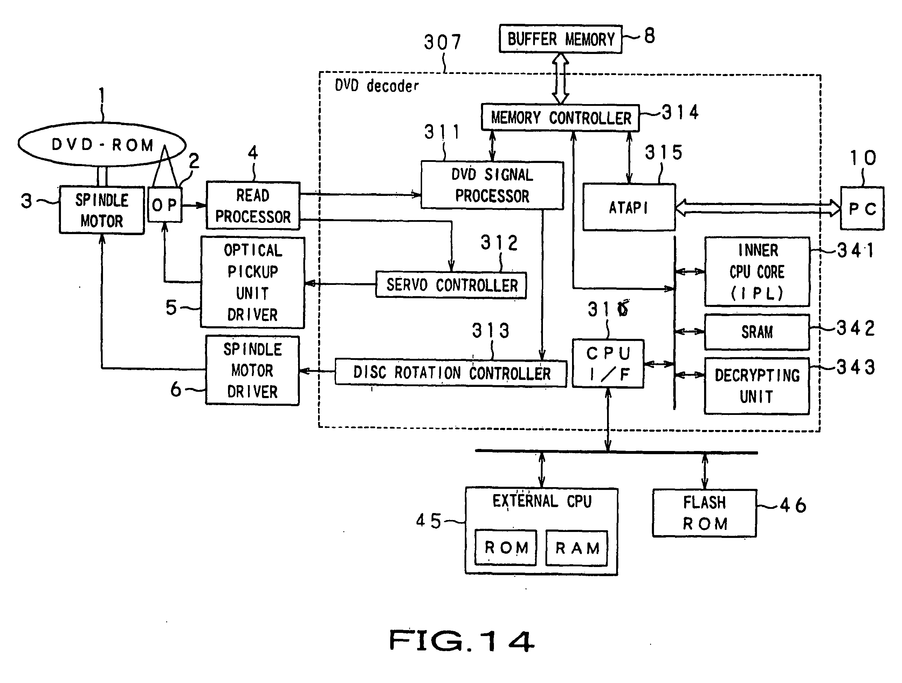

The DVD-ROM drive, shown as a first embodiment in Fig.14 includes a DVD decoder 307, corresponding to the DVD decoder 7 of Fig.1 provided internally with a CPU core 341, an SRAM 342 and a decoder 343. The DVD-ROM drive is otherwise the same in structure as the DVD-ROM drive shown in Fig.1. The internal core 341, SRAM 342 and the decoder 343 are connected over an internal bus to a memory controller 314 and to a CPU I/F 316. The DVD-ROM drive, shown in Fig.14, includes an external CPU 45, and a flash ROM 46, having stored the encrypted microprogram data, which is to be read into the DVD decoder 307.

The internal CPU core 341 is a micro-controller for controlling the DVD decoder 307. This internal CPU core 341 has stored therein an IPL which is a program for allowing the microprogram the internal CPU core executes to be read into the SRAM 342. The IPL is booted on power up of the DVD-ROM drive.

The SRAM 342 is a main memory device for the internal CPU core 341 in which to store micro-program data executed by the internal CPU core 341. In the SRAM 342, the encrypted micro-program data, read out by the IPL from the flash ROM 46, is decoded by the decoder 343 and stored.

The decoder 343 is a decoding circuit for decoding the microprogram data stored encrypted in the flash ROM 46 (encrypted microprogram data) to transfer the decrypted data to a program area of the SRAM 342. The decoder 343 decodes microprogram data encrypted in accordance with the common key cipher system (block cipher or stream cipher system).

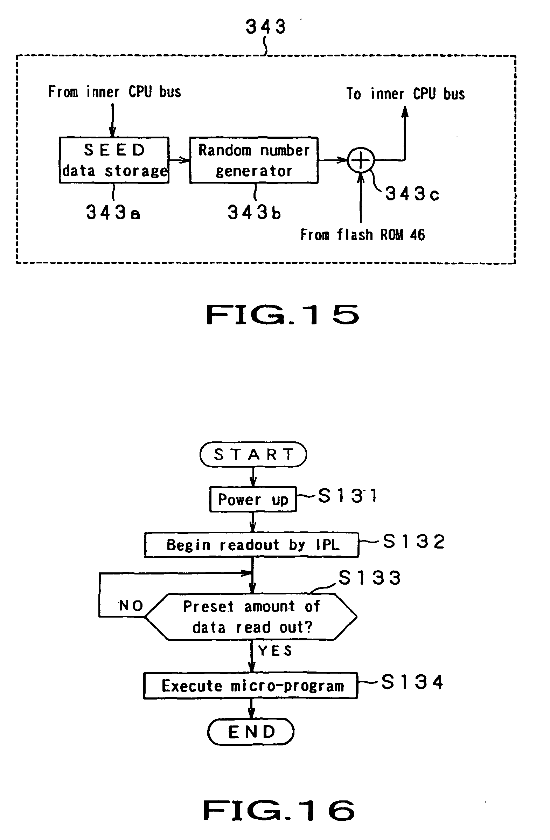

When adapted for coping with the stream cipher, the decoder 343 includes an SEED data storage unit 343a, a random number generating unit 343b and an exclusive-OR unit 343c, as shown in Fig.15.

The SEED data storage unit 343a has stored therein SEED data, which is an initial input value to the random number generating unit 343b and which corresponds to the common key, and outputs the stored SEED data to the random number generating unit 343b, responsive to a command from the internal CPU core 341.

The SEED data, stored in the SEED data storage unit 343a, may be of a pre-stored fixed value, or can be optionally set from the internal CPU core 341.

The random number generating unit 343b is responsive to the SEED data input from the SEED data storage unit 343a to generate random numbers, in accordance with a preset algorithm, to output the so generated random numbers to the exclusive-OR unit 343c.

The exclusive-ORunit 343c takes an Ex-Or of the encrypted microprogram data read out from the flash ROM 46 in terms of a preset data length as a unit, and the random numbers output from the random number generating unit 343b, by way of decrypting the microprogram data, and outputs the decrypted plaintext microprogram data over internal CPU bus to the SRAM 342 in the DVD decoder 307.

The CPU I/F 316 of the DVD decoder 307 also has a protecting function such that the microprogram data stored in the SRAM 342 in the DVD decoder 307, the SEED data stored in the SEED data storage unit 343a of the decoder 343 or the random number generating algorithm of the random number generating unit 343b cannot be referred to on the user level. This allows for imposing limitations on taking out the decrypted plaintext microprogram data or the decrypting function of decrypting the encrypted microprogram data.

The external CPU 45 is a controller for comprehensively controlling the DVD-ROM drive, and includes an arithmetic logic circuit, an adder or a register for executing arithmetic operations or comparative decisions.

The flash ROM 46 is a so-called flash memory, such as EEPROM, which is an electrically erasable programmable ROM. The flash ROM 46 has stored therein encrypted microprogram data which is the encrypted program of the internal CPU core 341.

Using the flowchart of Fig.16, the operation in booting the DVD-ROM drive shown in Fig.14 is explained.

In a step S131, the IPL, resident in the internal CPU core 341, is booted on power up and resetting. Simultaneously with the booting of the IPL, the decoder 343 is initialized by the random number generating unit 343b taking in the SEED data.

In a step S132, the encrypted microprogram data stored in the flash ROM 46 begins to be read out, by the IPL executed on the internal CPU core 341, beginning from the leading address of the flash ROM 46. The encrypted microprogram data, as read out, is input to the decoder 343 and Ex-Ored with output data of the random number generating unit 343b, so as to be decoded to the plaintext microprogram data. The decoded microprogram data is written in the SRAM 342.

In a step S133, it is verified, by the IPL executed on the internal CPU core 341, whether or not a preset amount of the encrypted microprogram data, stored in the flash ROM 46, has been read out. When a preset amount of the encrypted microprogram data has been read out, the internal CPU core 341 proceeds to a step S134. When a preset amount of the encrypted microprogram data has not been read out, readout from the flash ROM 46, decryption in the decoder 343 and writing in the SRAM 342 are carried out.

If, in a step S134, readout from the flash ROM 46 by the IPL executed on the internal CPU core 341 has come to a close, the internal CPU core 341 executes the plaintext microprogram data, written in the SRAM 342, with the value of an enclosed program counter as a leading address of the SRAM 342.

Thus, when the DVD-ROM drive shown in Fig. 14 is booted, the encrypted microprogram data, stored in the flash ROM 46, is read out by the IPL, decrypted in the DVD decoder 307 and written in the SRAM 342. Thus, with the microprogram, executed by the internal CPU core 341 of the DVD decoder 307, program analysis or tampering may be prohibited because the deciphering occurs within the DVD decoder 307.

Thus, in updating the firmware of the DVD-ROM drive, the firmware is encrypted and transferred from the PC 10 to the DVD-ROM drive and decrypted in the CPU 9 shown in Fig.1 or in the DVD decoder 207 shown in Fig.8 so as to be updated to the flash ROM in the CPU such as to prohibit analysis or tampering at the time of updating. Alternatively, the program loaded in booting, such as DVD-ROM drive shown in Fig.14, is read out to a decoding circuit in the encrypted state and decrypted in this circuit to prohibit analysis or tampering of the program at the time of loading.

Meanwhile, in the DVD-ROM drive, explained with reference to Fig.14, the microprogram stored in the SRAM 342 is supplied from the flash ROM 46connected to the DVD decoder 307 over a bus. This microprogram may, for example, be a read-only memory (ROM), a disc-shaped recording medium, or a removable semiconductor memory.

In the DVD-ROM drive, explained with reference to Fig.14, the processing of reading out the microprogram from the flash ROM 46 through the decryption unit 343 to the SRAM 342 is executed by the IPL provided to the internal CPU core 341 enclosed in the DVD decoder 307. Alternatively, this processing may be carried out under control by a CPU provided externally of the DVD decoder 307, such as by the external CPU 45.

It may, however, be contemplated that, if program leakage after decryption of the encrypted program could be prohibited, the program, as encrypted, may be tampered.

For example, if, in the DVD-ROM drive shown in Fig.1, the firmware as encrypted is tampered, the tampered data is stored in the flash ROM 22, thus possibly giving rise to illicit contents duplication or drive malfunctions.

In order to combat this, such a technique may be contemplated in which a program for verifying the fact of program tampering is attached to the program body to be updated to transmit the resulting program body to the DVD-ROM drive. It this verification program is attached to the program body to be updated, and the DVD-ROM drive executes this updated program, the verification program, attached to the program body, is first booted to verify whether or not the updated program has been tampered.

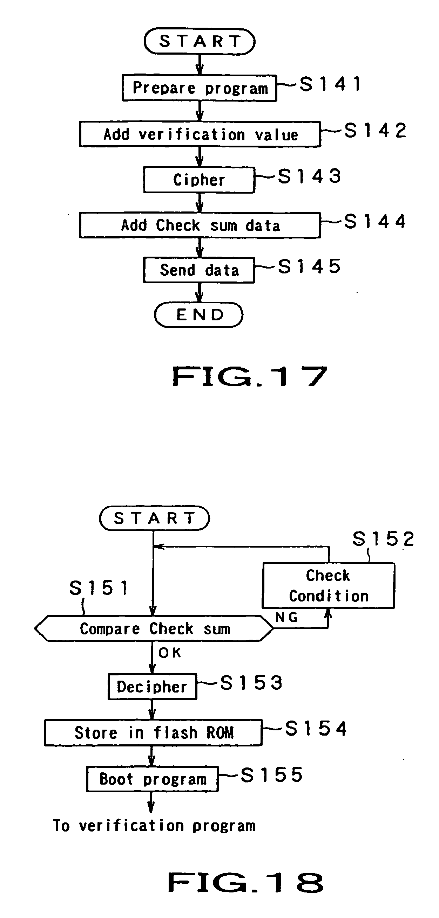

Using the flowchart, shown in Figs.17 to 19, the operation of updating the program such as to prohibit the encrypted data from being tampered is now explained. It is noted that the DVD-ROM drive shown in Fig.8 is used as a program updating drive only for explanation sake.

First, using the flowchart, shown in Fig.17, the operation until the program body, having the verification program attached thereto, is routed to the DVD-ROM drive, is explained.

In a step S141, a program for transmission to the DVD-ROM drive is prepared by for example a drive manufacturer. To the program body prepared is attached the aforementioned verification program for verifying the program tampering described above.

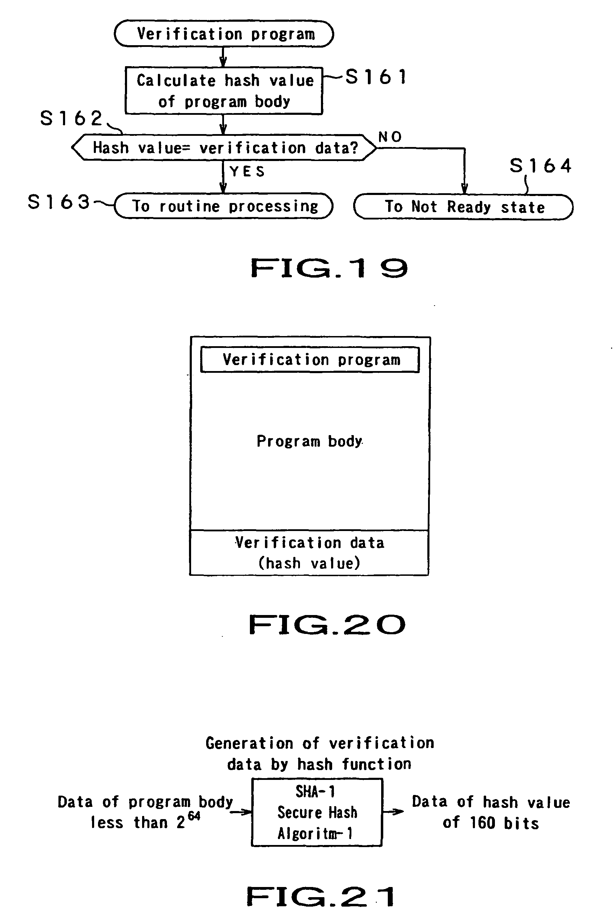

In a step S142, the drive manufacturer generates verification data from a program distributed to attach the so generated verification data to the program, as shown in Fig.20.

This verification data is a hash value obtained on executing the processing on the program body using the hash function. For example, SHA (Secure Hash Algorithm)-1, further improved from SHA, provided by the standardization organization NIST, belonging to the US Department of Commerce, may be used as this hash function, as shown for example in Fig.21. This SHA-1 is an algorithm for generating hash values of 160 bit length (verification data) from a data length less than 2⁶⁴.

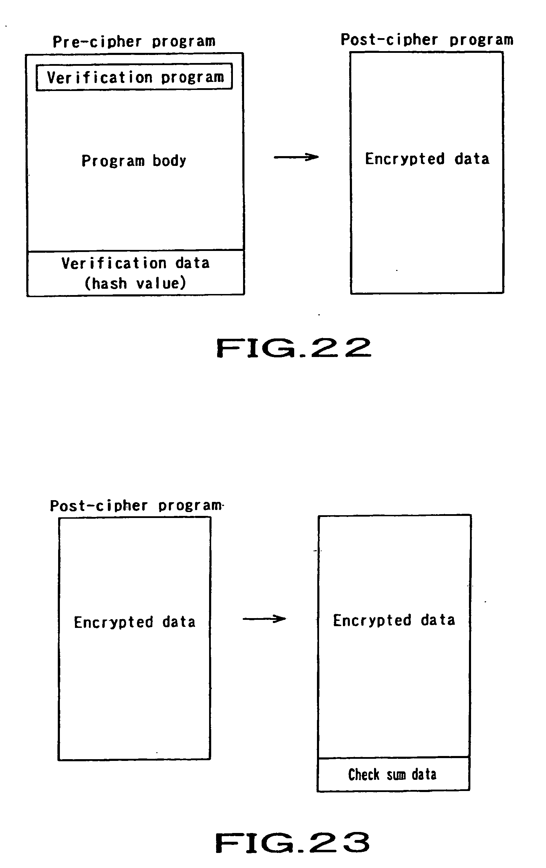

In a step S143, the drive manufacturer encrypts the program, added by the verification data, so as to encompass the verification data, as shown in Fig.22.

In a step S144, the drive manufacturer calculates Check Sum data from the encrypted program to attach the so calculated Check Sum data, as shown in Fig.23. The data attached may also be hash values, found from the hash functions, in place of the Check Sum data. The program, thus added by the Check Sum data, becomes data that permits of transmission.

The data, that permits of transmission, is delivered to the user (PC 10), using for example the ROM medium.

In a step S145, the PC 10 transmits to the DVD-ROM drive the data (program) which now permits of transmission.

Using the flowchart, shown in Fig.18, the operation of the DVD-ROM drive, receiving the program, in which measures have been taken to prevent tampering of encrypted data transmitted from the PC 10, is now explained.

In a step S151, on receipt of a program, transmitted from the PC 10 along with the Write buffer command, the DVD-ROM drive compares the Check Sum data, attached to the program, to the sum value of the program data transmitted encrypted. If the two values are not coincident with each other, the DVD-ROM drive proceeds to a step S152 and, if otherwise, the DVD-ROM drive proceeds to a step S153.

In the step S152, the DVD-ROM drive informs the PC 10 of the fact that the encrypted program data has not been transmitted correctly, as demonstrated from the results of comparison of the CheckSum data, by terminating the command with Check Condition Status. The DVD-ROM drive then reverts to the step S151.

In the step S153, the decryption unit 17 decrypts the encrypted microprogram data. The verification data are attached to the decrypted data, while the verification program is stated in the program body.

In a step S154, the decrypted program data is stored in the flash ROM 38.

In a step S155, when the program stored in the flash ROM 38 is booted, the verification program is run first.

Using the flowchart shown in Fig. 19, the operation of the verification program is explained.

In a step S161, the booted verification program calculates the hash values of the program body by the hash functions.

In a step S162, the verification program compares the verification data attached to the program body to the calculated hash value. If the two values are coincident with each other, the verification program proceeds to a step S163. If the two values are not coincident with each other, the verification program proceeds to a step S164.

In the step S163, the DVD-ROM drive executes the program body stored in the flash ROM 38, in response to the decision that the program stored in the flash ROM 38 is not tampered, with the attached verification data coinciding with the calculated hash values.

In the step S164, the DVD-ROM drive falls under a Not Ready state, or in a stabilized non-operating state, in response to the decision that the program stored in the flash ROM 38 is tampered, with the attached verification data not coinciding with the calculated hash values.

By attaching to the program body, being transmitted, the verification data calculated from the hash function, and transmitting the resulting program body, the DVD-ROM drive is able to verify the fact of tampering, even in cases wherein the encrypted data itself has been tampered.

In the DVD-ROM drive according to the above-described first and second embodiments of the present invention, the firmware to be updated is transmitted from the PC 10. Alternatively, the firmware may be recorded on the DVD-ROM 1 reproducible on for example the DVD-ROM drive. By storing the encrypted firmware data as a file in the DVD-ROM 1, the DVD-ROM drive is able to reproduce this DVD-ROM 1 to acquire the firmware to be updated.

In similar manner, in the DVD-ROM drive according to the third embodiment of the present invention, the DVD-ROM 1, having recorded the encrypted microprogram data as a file, may be reproduced to load the microprogram.

Meanwhile, the program booted in updating the firmware written in the boot ROM 21 of the DVD-ROM drive, shown as the first embodiment of the present invention, may be written in the DVD-ROM 1. The firmware may be updated by the DVD-ROM drive reproducing the DVD-ROM 1.

In similar manner, the program that is booted in updating the firmware on the DVD-ROM drive, according to the second embodiment of the present invention, may be written in the DVD-ROM 1. The firmware may be updated by the DVD-ROM drive reproducing the DVD-ROM 1 as discussed above.

In similar manner, the program that is booted in loading the microprogram on the DVD-ROM drive, according to the third embodiment of the present invention, may be written in the DVD-ROM 1. The microprogram may be loaded by the DVD-ROM drive reproducing the DVD-ROM 1 as discussed above.

Moreover, in the DVD-ROM drive, shown as the first or second embodiment of the present invention, a slot for a semiconductor memory, associated with the semiconductor memory, such as a Memory-Stick (registered trademark), may be provided, and the encrypted firmware data may be recorded in the semiconductor memory in place of the DVD-ROM 1 to update the firmware.

In similar manner, in a DVD-ROM drive according to the third embodiment of the present invention, the encrypted microprogram data may be recorded in the removable semiconductor memory to load the microprogram.

In the first to third embodiments of the present invention, the DVD-ROM drive is used. The present invention, however, is not limited to this configuration, but may be applied to a disc apparatus capable of recording and/or reproducing a CD-ROM, a CD-R, CD-RW, a DVD-RAM, a DVD-R/RW or a DVD+R/RW, having data recorded thereon.

Although he DVD-ROM drive is used in the first to third embodiments of the present invention, the present invention is not limited to this configuration but may be applied to processing apparatus in need of some or other security in general.

Although the encryption technique employing a common key is used as a technique for encrypting or decrypting the firmware or the microprogram, the present invention is not limited to this configuration. For example, the public key system or other encryption algorithm may also be used.

Furthermore, although the DVD-ROM drive of the first to third embodiments of the present invention is designed to process the firmware or the microprogram, it may be data that is processed, in other words, the data such as setting values of a rewritable register or memory in the DVD-ROM drive may for example be updated or set.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A circuit device (307) for performing pre-set data processing, comprising:
data receiving means (316) operable to receive data having both first verification data and an unencrypted verification program; and
controlling means (341) operable to calculate, from said data, second verification data using the unencrypted verification program before use of said data, and to compare said calculated second verification data to the first verification data;
wherein the circuit device (307) is operable to use said data responsive to coincidence of the first verification data and the second verification data compared to each other.

2. A circuit device (307) according to claim 1, in which the data is program data.

3. A circuit device (307) according to claim 1 or claim 2, which is an integration of data processing means of an information processing apparatus.

4. A DVD-drive comprising:
a circuit device (307) according to any one of the preceding claims; and
a flash ROM (46) for storing the unencrypted verification program.

5. A method of performing pre-set data processing, comprising the steps of:
receiving data having both first verification data and an unencrypted verification program;
calculating, from said data, second verification data using the unencrypted verification program before use of said data; and
comparing said calculated second verification data to the first verification data;
wherein said data is used responsive to coincidence of the first verification data and the second verification data compared to each other.

## Patentansprüche

1. Schaltungseinrichtung (307) zum Durchführen vorher festgelegter Datenverarbeitung, welche umfasst:
eine Datenempfangseinrichtung (316), die betriebsfähig ist, Daten zu empfangen, welche sowohl erste Vetifizierungsdaten als auch ein nicht verschlüsseltes Verifizierungsprogramm haben; und
eine Steuereinrichtung (341), die betriebsfähig ist, von den Daten zweite Verifizierungsdaten unter Verwendung des nicht verschlüsselten Verifizierungsprogramms vor Verwendung der Daten zu berechnen und um die berechneten zweiten Verifizierungsdaten mit den ersten Verifizierungsdaten zu vergleichen;
wobei die Schaltungseinrichtung (307) betriebsfähig ist, die Daten als Antwort auf Koinzidenz der ersten Verifizierungsdaten und der zweiten Verifizierungsdaten, welche miteinander verglichen werden, zu verwenden.

2. Schaltungseinrichtung (307) nach Anspruch 1, bei der die Daten Programmdaten sind.

3. Schaltungseinrichtung (307) nach Anspruch 1 oder 2, welche eine Integration einer Datenverarbeitungseinrichtung einer Informationsverarbeitungsvorrichtung ist.

4. DVD-Ansteuerung, die umfasst:
eine Schaltungseinrichtung (307) nach einem der vorhergehenden Ansprüche; und
einen Flash-ROM (46) zum Speichern des nicht verschlüsselten Verifizierungsprogramms.

5. Verfahren zum Durchführen vorher festgelegter Datenverarbeitung, welches folgende Schritte umfasst:
Empfangen von Daten, welche sowohl erste Verifizierungsdaten als auch ein nicht verschlüsseltes Verifizierungsprogramm haben;
Berechnen - von den Daten - zweiter Verifizierungsdaten unter Verwendung des nicht verschlüsselten Verifizierungsprogramms vor Verwendung der Daten; und
Vergleichen der berechneten zweiten Verifizierungsdaten mit den ersten Verifizierungsdaten;
wobei die Daten als Antwort auf Koinzidenz der ersten Verifizierungsdaten und der zweiten Verifizierungsdaten, welche miteinander verglichen werden, verwendet werden.

## Revendications

1. Circuit (307) pour réaliser le traitement de données préétablies, comprenant :
un moyen de réception de donnée (316) pouvant fonctionner pour recevoir des données ayant à la fois des premières données de vérification et un programme de vérification non crypté ; et
un moyen de commande (341) pouvant fonctionner pour calculer, à partir desdites données, des secondes données de vérification en utilisant le programme de vérification non crypté avant d'utiliser lesdites données, et pour comparer lesdites secondes données de vérification par rapport aux premières données de vérification ;
dans lequel le dispositif de circuit (307) peut fonctionner pour utiliser lesdites données en réponse à une coïncidence des premières données de vérification et des secondes données de vérification comparées les unes aux autres.

2. Circuit (307) selon la revendication 1, dans lequel les données sont des données de programme.

3. Circuit (307) selon la revendication 1 ou la revendication 2, qui est une intégration du moyen de traitement de données d'un dispositif de traitement d'informations.

4. Lecteur de DVD comprenant :
un circuit (307) selon l'une quelconque des revendications précédentes ; et
une mémoire flash (46) pour stocker le programme de vérification non crypté.

5. Procédé pour réaliser le traitement de données préétablies comprenant les étapes consistant à :
recevoir des données ayant à la fois des premières données de vérification et un programme de vérification non crypté ;
calculer, à partir desdites données, des secondes données de vérification en utilisant le programme de vérification non crypté avant d'utiliser lesdites données ; et
comparer lesdites secondes données de vérification calculées par rapport aux premières données de vérification ;
dans lequel lesdites données sont utilisées en réponse à une coïncidence des premières données de vérification et des secondes données de vérification comparées les unes aux autres.
